(19) Europäisches Patentamt
European Patent Office
Office européen des brevets

(11) **EP 1 286 919 B1**

(12) **FASCICULE DE BREVET EUROPEEN**

(45) Date de publication et mention de la délivrance du brevet:
**09.03.2005 Bulletin 2005/10**

(51) Int Cl.⁷: **C01G 1/02**, C01G 39/00, C01G 41/00, C01B 13/02, B01D 71/02, B01D 53/22, H01M 8/12

(21) Numéro de dépôt: **01921489.9**

(22) Date de dépôt: **05.04.2001**

(86) Numéro de dépôt international:
**PCT/FR2001/001029**

(87) Numéro de publication internationale:
**WO 2001/077022 (18.10.2001 Gazette 2001/42)**

(54) **COMPOSES DERIVES DE La 2?Mo 2?O 9? ET LEUR UTILISATION COMME CONDUCTEURS IONIQUES**

VON LA2MO2O9 ABGELEITETE VERBINDUNGEN UND DEREN VERWENDUNG ALS IONENLEITER

COMPOUNDS DERIVED FROM LA 2?MO 2?O 9? AND THEIR USE AS IONIC CONDUCTORS

(84) Etats contractants désignés:
**AT BE CH CY DE DK ES FI FR GB GR IE IT LI LU MC NL PT SE TR**

(30) Priorité: **07.04.2000 FR 0004488**

(43) Date de publication de la demande:
**05.03.2003 Bulletin 2003/10**

(73) Titulaires:
• **Rhodia Terres Rares**
**17041 La Rochelle Cédex (FR)**
• **CENTRE NATIONAL DE LA RECHERCHE SCIENTIFIQUE (CNRS)**
**75794 Paris Cedex 16 (FR)**

(72) Inventeurs:
• **GOUTENOIRE, François**
**F-72000 Le Mans (FR)**
• **LACORRE, Philippe**
**F-72700 Etival-lès-Le Mans (FR)**

(74) Mandataire: **Sueur, Yvette et al**
**Cabinet SUEUR et L'HELGOUALCH,**
**109, boulevard Haussmann**
**75008 Paris (FR)**

(56) Documents cités:
**EP-A- 0 663 231      WO-A-99/21649**
**DE-A- 19 807 269      US-A- 5 723 074**

• **PATENT ABSTRACTS OF JAPAN vol. 199, no. 601, 31 janvier 1996 (1996-01-31) & JP 07 237968 A (KYOCERA), 12 septembre 1995 (1995-09-12)**

## Description

L'invention concerne de nouveaux composés dérivés de $La_2Mo_2O_9$ et leur utilisation comme conducteurs ioniques.

Les conducteurs ioniques peuvent être utilisés dans de nombreuses applications. On peut citer notamment le domaine des piles à combustible qui connaît actuellement un développement croissant. Il y a donc un besoin en matériaux de ce type. Par ailleurs, dans ce cas particulier des piles à combustible, les piles qui existent actuellement fonctionnent à des températures élevées, d'au moins 900°C. A ces températures, les phénomènes de réduction et de diffusions cationiques dans les différents éléments de la pile introduisent des réactions chimiques aux interfaces suivies d'une dégradation des performances électriques. On cherche donc des matériaux conducteurs permettant d'abaisser les températures de fonctionnement de ces piles et donc des produits dont la conductivité à des températures plus basses soit suffisante.

L'objet de l'invention est de procurer des composés répondant à ces besoins.

Dans ce but, les composés de l'invention sont caractérisés en ce qu'ils répondent à la formule (1) :

$$A_{2-x} A'_x B_{2-y} B'_y O_{9-z+\delta} X_z$$

dans laquelle

- A est au moins un élément trivalent choisi parmi les terres rares trivalentes, le bismuth trivalent, l'antimoine trivalent et l'arsenic trivalent;
- A' est au moins un élément choisi parmi
  les éléments monovalents alcalins;
  les éléments divalents appartenant au groupe comprenant les alcalino-terreux, l'étain, le plomb, le samarium, l'europium, l'erbium, le thulium ou l'ytterbium;
  les éléments quadrivalents appartenant au groupe comprenant le thorium,
  l'uranium, les éléments du groupe IVA, le cérium, le praséodyme, le terbium;
- B est au moins un élément hexavalent choisi parmi ceux des groupes VIA, VIIA, VIII et du groupe VIB excepté l'oxygène;
- B' est au moins un élément choisi parmi le lithium, le sodium, le magnésium, le calcium, le scandium, l'yttrium, les terres rares de numéro atomique 63 à 71, les éléments des groupes IVA à IIB dans un état d'oxydation inférieur à 6, l'aluminium III, le silicium IV, le gallium III, le germanium IV, l'indium III, l'étain IV, le phosphore V, l'antimoine V et le bismuth V;
- X est au moins un anion choisi parmi le soufre, le fluor ou le chlore;
- x, y et z vérifient les équations suivantes :

$$0 \leq x < 2; \ 0 \leq y < 2; \ 0 \leq z \leq 3$$

et avec comme condition que lorsque A est le lanthane et B le tungstène ou le molybdène, au moins un de x, de y ou de z est différent de 0;
les composés présentant un réseau cationique de type $\beta$-$SnWO_4$ cubique ou pseudo-cubique.

D'autres caractéristiques, détails et avantages de l'invention apparaîtront encore plus complètement à la lecture de la description qui va suivre, ainsi que des divers exemples concrets mais non limitatifs destinés à l'illustrer.

Une première caractéristique des composés de l'invention est qu'ils présentent un réseau cationique du type $\beta$-$SnWO_4$ cubique ou pseudo-cubique. Le réseau cationique du type $\beta$-$SnWO_4$ cubique ou pseudo-cubique peut présenter des sur-structures commensurables (multiplication par un nombre entier des paramètres a, b, c) ou incommensurables de la maille cubique ou pseudo cubique. Par pseudo-cubique, on entend que le réseau cubique peut être plus ou moins distordu. Généralement, cette distorsion de la structure du réseau correspond à une variation d'au plus 1% sur chacun des paramètres a, b, c et $\alpha$, $\beta$, $\gamma$ par rapport à la valeur de ces mêmes paramètres pour la structure cubique. Cette variation peut être plus particulièrement d'au plus 0,5% et encore plus particulièrement d'au plus 0,2%.

La détermination du type de structure a été faite par diffraction RX à haute résolution, à température ambiante (20±5°C) en utilisant un diffractomètre Bruker-AKS D8 $\theta$-$2\theta$ ($CuK\alpha_1 + K\alpha_2$). A température plus élevée ou plus basse que l'ambiante, il est possible que les composés de l'invention se présentent sous une structure différente.

Les différents éléments constitutifs des composés de l'invention vont maintenant être décrits plus précisément.

La classification périodique des éléments à laquelle il est fait référence pour l'ensemble de la description est celle publiée dans le Supplément au Bulletin de la Société Chimique de France n° 1 (janvier 1966). Par ailleurs, on entend par terre rare un élément du groupe constitué par l'yttrium et les éléments de la classification périodique de numéro atomique compris inclusivement entre 57 et 71.

On fait remarquer ici que l'invention s'applique bien aux cas où dans la formule (1) A et/ou B sont des combinaisons de deux ou de plusieurs éléments choisis parmi ceux donnés dans les définitions précédentes de A et B. Dans un tel cas les proportions respectives des éléments de telles combinaisons peuvent être quelconques.

A est au moins un élément trivalent qui est choisi parmi les terres rares trivalentes, le bismuth trivalent, l'antimoine trivalent et l'arsenic trivalent. La terre rare peut être plus particulièrement choisie dans le groupe comprenant le lanthane, le cérium, le praséodyme, le néodyme, le samarium, l'europium et le gadolinium. Selon une variante de l'invention, cette terre rare peut être le lanthane, le néodyme ou une combinaison des deux.

Selon une autre variante, l'élément A peut être le lanthane en combinaison avec le bismuth.

Comme indiqué plus haut, l'élément A' peut être au moins un élément choisi parmi les éléments monovalents alcalins ou les éléments divalents appartenant au groupe comprenant les alcalino-terreux. A peut ainsi être plus particulièrement choisi parmi le potassium, le strontium, le baryum.

A' peut par ailleurs être l'étain, le plomb, le samarium, l'europium, l'erbium, le thulium ou l'ytterbium, ces éléments étant présents alors à l'état divalent.

Enfin A' peut être choisi parmi les éléments quadrivalents appartenant au groupe comprenant le thorium, l'uranium, le cérium, le praséodyme, le terbium et les éléments du groupe IVA, notamment le zirconium et l'hafnium dans ce dernier groupe.

B peut être au moins un élément hexavalent choisi parmi ceux du groupe VIA. Dans ce cas, selon un mode de réalisation particulier de l'invention, B peut être le molybdène. Selon des variantes, B peut être le molybdène en combinaison avec le tungstène ou le chrome ou les deux. B peut aussi être choisi parmi les éléments du groupe VIIA. Il s'agit plus particulièrement dans ce cas du manganèse et du rhénium. B peut encore être choisi parmi les éléments du groupe VIII. Dans ce cas, il peut s'agir notamment du ruthénium, de l'osmium ou de l'iridium. B peut enfin être choisi dans le groupe VIB excepté l'oxygène. On peut citer plus particulièrement le soufre comme élément de ce groupe et, à titre de variante spécifique, les composés pour lesquels B est une combinaison du soufre et du molybdène.

B' est au moins un élément choisi parmi le lithium, le sodium, le magnésium, le calcium, le scandium, l'yttrium, les terres rares de numéro atomique 63 à 71, c'est à dire de l'europium au lutécium. B' peut aussi être choisi parmi les éléments des groupes IVA à IIB dans la mesure où cet élément ou ces éléments présentent un état d'oxydation inférieur à 6. Comme élément de ces groupes, on peut citer plus particulièrement le vanadium. Enfin, B' peut être choisi parmi l'aluminium III, le silicium IV, le gallium III, le germanium IV, l'indium III, l'étain IV, le phosphore V, l'antimoine V et le bismuth V.

Selon la formule (1) donnée plus haut, x, y et z vérifient les équations suivantes :

$$0 \leq x < 2; \quad 0 \leq y < 2; \quad 0 \leq z \leq 3$$

On notera que la valeur de $\delta$ est celle qui assure la neutralité électrostatique du composé compte tenu de la nature des éléments A, A', B, B', X et des valeurs de x, y et z. La valeur de $\delta$ peut être positive ou négative.

x peut vérifier plus particulièrement l'équation $0 \leq x \leq 1$, notamment dans le cas où A' est au moins un élément mono ou divalent autre que le plomb ou l'étain. Encore plus particulièrement, la valeur de x peut être comprise entre 0 et 0,6, les valeurs aux bornes étant incluses.

Par ailleurs, la valeur de y peut être comprise notamment entre 0 et 1,5, les valeurs aux bornes étant incluses.

Le choix des éléments A, A', B, B', X et la variation des valeurs de x, y et z sont conditionnés par le fait que le composé concerné doit présenter un réseau cationique de type $\beta$-SnWO$_4$ cubique ou pseudo-cubique.

Le rapport atomique R défini par (A+A')/(B+B') peut être égal à 1 ou peut varier autour de cette valeur. Là encore, la variation de la valeur de ce rapport se fait dans la mesure où l'on reste dans un réseau cationique du type précité plus ou moins lacunaire.

On donne ci-dessous des composés correspondant à des modes de réalisation particuliers de l'invention :

$$\text{La}_{2-x}\, \text{A'}_x\, \text{Mo}_{2-y}\, \text{B'}_y\, \text{O}_{9+\delta} \; ; \; (\text{La,Bi})_{2-x}\, \text{A'}_x\, \text{Mo}_{2-y}\, \text{B'}_y\, \text{O}_{9+\delta}$$

$$\text{La}_{2-x}\, \text{A'}_x\, \text{W}_{2-y}\, \text{B'}_y\, \text{O}_{9+\delta} \; ; \; (\text{La,Bi})_{2-x}\, \text{A'}_x\, \text{W}_{2-y}\, \text{B'}_y\, \text{O}_{9+\delta}$$

$$\text{La}_{2-x}\, \text{A'}_x\, \text{(Mo,S)}_{2-y}\, \text{B'}_y\, \text{O}_{9+\delta};\ \text{La}_{2-x}\, \text{A'}_x\, \text{(Mo,Cr)}_{2-y}\, \text{B'}_y\, \text{O}_{9+\delta}$$

$$\text{La}_{2-x}\, \text{A'}_x\, \text{(Mo,W)}_{2-y}\, \text{B'}_y\, \text{O}_{9+\delta}$$

$$\text{(La,Bi)}_{2-x}\, \text{A'}_x\, \text{(Mo,S)}_{2-y}\, \text{B'}_y\, \text{O}_{9+\delta};\ \text{(La,Bi)}_{2-x}\, \text{A'}_x\, \text{(Mo,Cr)}_{2-y}\, \text{B'}_y\, \text{O}_{9+\delta}$$

$$\text{(La,Bi)}_{2-x}\, \text{A'}_x\, \text{(Mo,W)}_{2-y}\, \text{B'}_y\, \text{O}_{9+\delta}$$

$$\text{La}_{2-x}\, \text{A'}_x\, \text{Mo}_{2-y}\, \text{B'}_y\, \text{O}_{9-z+\delta}\, \text{F}_z;\ \text{(La,Bi)}_{2-x}\, \text{A'}_x\, \text{Mo}_{2-y}\, \text{B'}_y\, \text{O}_{9-z+\delta}\, \text{F}_z$$

$$\text{(La,Bi)}_{2-x}\, \text{A'}_x\, \text{(Mo,W)}_{2-y}\, \text{B'}_y\, \text{O}_{9-z+\delta}\, \text{F}_z$$

composés pour lesquels A' et B' sont tels que définis précédemment et A' pouvant être plus particulièrement $K^+$, $Sr^{2+}$ et $Ba^{2+}$ et B' plus particulièrement $V^{5+}$; le rapport entre La et Bi (rapport atomique Bi/(La+Bi) peut aller notamment jusqu'à 15%; et les rapports entre $S^{6+}$, $Cr^{6+}$, $W^{6+}$ d'une part et $Mo^{6+}$ d'autre part, exprimés de la même manière, peuvent être en particulier d'au moins 50%.

Les composés de l'invention peuvent être préparés par différents types de procédés.

Ainsi, on peut utiliser un procédé mettant en oeuvre une réaction de type solide-solide. Comme réactifs solides de départ on utilise généralement des oxydes, des carbonates, notamment pour les alcalins ou les alcalino-terreux, ou des sulfates. Les réactifs sont mélangés dans les proportions stoechiométriques de la composition recherchée puis chauffés. Le chauffage est conduit dans des conditions de température et de durée qui permettent d'obtenir la formation de l'oxyde recherché. Le chauffage se fait généralement soit sous air, soit sous atmosphère réductrice, soit encore sous pression plus ou moins forte d'oxygène. La température de calcination peut être d'au moins 500°C, plus particulièrement d'au moins 700°C et la durée peut être d'au moins une dizaine d'heures.

Il est possible de faire plusieurs chauffages à la suite et de broyer le produit entre ces différents chauffages.

Un autre procédé est envisageable. Ainsi, on peut former un mélange des sels des éléments constitutifs du composé, comme des nitrates ou des chlorures, dans un milieu organique (alcool par exemple) ou aqueux, puis on précipite par addition d'un composé basique comme l'ammoniaque et/ou par addition de gaz carbonique. Le précipité obtenu est éventuellement séché, puis calciné.

Pour les composés comprenant du fluor, le fluor peut être introduit par la voie solide, par une voie solide-gaz ou par voie liquide, en milieu HF par exemple.

Les composés ainsi obtenus se présentent habituellement sous forme d'une poudre. Ils peuvent être frittés si nécessaire. Le frittage se fait d'une manière connue en soi. Le composé est tout d'abord mis en forme. Cette mise en forme peut se faire par pressage, par exemple par pressage uniaxial, par calandrage ou par coulage en bande (tape casting). Pour la mise en forme, on peut utiliser un liant de type connu comme notamment l'alcool polyvinylique, les résines (type "Carbowax" par exemple), des stéarates métalliques tels que les stéarates d'aluminium et de zinc, des sucres, des amidons, des alginates et du polyméthylphénylène. La pièce ainsi formée est ensuite frittée, avec ou sans pression, en mettant en oeuvre une température et une durée suffisantes avec une atmosphère convenable pour obtenir la densité souhaitée.

Les composés en poudre peuvent aussi être extrudés sous des formes variées de type monolithe, nid d'abeille, ou cylindre par exemple. Ils peuvent être déposés sous forme de couches sur des substrats.

Les composés de l'invention, de par leur structure, ont la propriété d'être des conducteurs ioniques, plus particulièrement des conducteurs anioniques. Cette propriété a pu être mise aussi en évidence dans le composé parent des composés de l'invention, c'est à dire $\text{La}_2\text{Mo}_2\text{O}_9$. De ce fait, l'invention concerne aussi l'utilisation comme conducteurs ioniques des composés décrits ci-dessus ainsi que du composé parent précité.

Ces composés peuvent ainsi être utilisés dans toutes les applications mettant en oeuvre cette propriété de conductivité. Comme applications de ce type on peut mentionner les filtrations électrochimiques par filtres poreux, les traitements électrochimiques des effluents gazeux, la catalyse hétérogène, notamment pour la catalyse d'oxydation ménagée (oxydation couplante du méthane), la catalyse de déshydrogénation. Ces composés peuvent aussi être utilisés dans la préparation de matrices pour luminophore nécessitant des matériaux susceptibles d'évacuer des charges ou dans la préparation de produits à propriétés de luminescence pour écran de télévision notamment. Les composés peuvent aussi être utilisés pour leur propriété thermochrome.

Les composés de l'invention peuvent être incorporés aussi dans des sondes à oxygène par exemple des sondes λ pour la régulation des gaz d'échappement, dans les capteurs de NOx, dans les piles à combustible à oxydes solides, dans les réacteurs chimiques à membrane, par exemple les réacteurs pour l'oxydation ménagée des hydrocarbures, ou encore dans les membranes de séparation d'oxygène. L'invention concerne donc les dispositifs du type précité comprenant un composé selon l'invention à titre de conducteur ionique.

Des exemples vont maintenant être donnés.

EXEMPLES

Les composés sont préparés à partir des oxydes simples pour W, Mo, Bi, V, La et Re, à partir des carbonates pour K, Sr et Ba et à partir du sulfate de lanthane pour le soufre. Pour le chrome, on utilise $La_2CrO_6$ obtenu à partir de $La_2O_3$ et $Cr_2O_3$ sous oxygène. Pour le fluor, on utilise l'oxyfluorure de lanthane. Ces réactifs de départ sont mélangés dans les proportions adéquates.

Les produits broyés sont mélangés dans un mortier en agate puis placés dans un creuset en alumine. On chauffe d'abord pendant 12 heures à 500°C puis on calcine à une température comprise entre 700°C et 1100°C suivant les cas, pendant au moins 12 heures. On laisse refroidir. On recommence le cycle de broyage et de calcination jusqu'à l'obtention d'un produit pur. La calcination se fait sous air sauf pour les produits comprenant du chrome, du rhénium ou du fluor. Dans le cas du chrome, la calcination est faite sous flux d'oxygène (1 atmosphère) et dans ceux du rhénium et du fluor, en tube de platine scellé.

Les composés ainsi obtenus sous forme d'une poudre sont ensuite frittés de la manière suivante. On mélange la poudre avec un liant (Rhodoviol®). La pâte obtenue est deshydratée. La pâte durcie est broyée puis pastillée par pressage uniaxial (1 à 2T/20mm$^2$). Le produit est recuit avec un palier à 400°C puis on calcine à 700°C-1050°C pendant 6 à 12 heures. On refroidit lentement. Le produit fritté se présente sous forme de barreaux (5mm de diamètre sur 5 à 7 mm de longueur environ).

La conductivité a été déterminée par spectroscopie d'impédance complexe dans la gamme de fréquence de 0,1Hz à 32MHz en utilisant un analyseur Solartron SI 1260. La mesure est faite sur les barreaux précités, des électrodes de platine ayant été déposées sous vide sur leurs deux surfaces planes. La mesure est faite sous air sec à un potentiel de 100mV après une heure de stabilisation thermique.

On donne ci-dessous les valeurs sur le paramètre de maille à l'ambiante et les conductivités à 500°C et 800°C obtenues pour les produits.

| Exemples | Température de calcination à la synthèse °C | Paramètre en Å |
|---|---|---|
| $La_2Mo_2O_9$ | 850 | 7,150 (pseudo-cubique) |
| $La_2Mo_{1,6}S_{0,4}O_9$ | 800 | 7,146 (cubique) |
| $La_2Mo_{1,7}W_{0,3}O_9$ | 1000 | 7,152 (cubique) |
| $La_2MoWO_9$ | 1100 | 7,153 (cubique) |
| $La_2MoCrO_{9+\delta}$ | 700 | 7,132 (cubique) |
| $La_2Mo_{1,95}V_{0,05}O_{8,975}$ | 900 | 7,150 (cubique) |
| $La_2Mo_{1,9}Re_{0,1}O_{9+\delta}$ | 900 | 7,157 (cubique) |
| $La_{1,9}Bi_{0,1}Mo_2O_9$ | 850 | 7,164 (cubique) |
| $La_{1,7}Bi_{0,3}Mo_2O_9$ | 850 | 7,190 (cubique) |
| $La_{1,9}K_{0,1}Mo_2O_{8,9}$ | 960 | 7,172 (cubique) |
| $La_{1,9}Sr_{0,1}Mo_2O_{8,95}$ | 1050 | 7,168 (cubique) |
| $La_{1,8}Ba_{0,2}Mo_2O_{8,95}$ | 970 | |
| $La_2Mo_2O_{9-z/2}F_z$ (z≤0,1) | 900 | 7,167 (pseudo-cubique) |

| Exemples | Conductivité en S.cm$^{-1}$ | |
|---|---|---|
| | à 500°C | à 800°C |
| $La_2Mo_2O_9$ | $4,64.10^{-5}$ | $8,02.10^{-2}$ |

(suite)

| Exemples | Conductivité en S.cm$^{-1}$ | |
|---|---|---|
| | à 500°C | à 800°C |
| $La_2Mo_{1,6}S_{0,4}O_9$ | $1,01.10^{-4}$ | $4,81.10^{-2}$ |
| $La_2Mo_{1,7}W_{0,3}O_9$ | $1,77.10^{-4}$ | $6,04.10^{-2}$ |
| $La_2MoWO_9$ | $9,33.10^{-6}$ | $4,21.10^{-3}$ |
| $La_2MoCrO_9$ | $5,42.10^{-4}$ | $9,98.10^{-3}$ |
| $La_2Mo_{1,95}V_{0,05}O_9$ | $3,00.\ 10^{-5}$ | $5,2.10^{-2}$ |
| $La_{1,9}Bi_{0,1}Mo_2O_9$ | $2,05.10^{-4}$ | $6,96.10^{-2}$ |
| $La_{1,7}Bi_{0,3}Mo_2O_9$ | $1,33.10^{-4}$ | $2,22.10^{-2}$ |
| $La_{1,9}K_{0,1}Mo_2O_{8,9}$ | $1,40.10^{-5}$ | $5,65.10^{-3}$ |
| $La_{1,9}Sr_{0,1}Mo_2O_{8,95}$ | $1,20.10^{-5}$ | $6,03.10^{-3}$ |
| $La_{1,8}Ba_{0,2}Mo_2O_{8,95}$ | $8,56.10^{-6}$ | $2,74.10^{-3}$ |

## Revendications

1. Composé de formule (1) :

$$A_{2-x}\ A'_x\ B_{2-y}\ B'_y\ O_{9-z+\delta}\ X_z$$

dans laquelle

- A est au moins un élément trivalent choisi parmi les terres rares trivalentes, le bismuth trivalent, l'antimoine trivalent et l'arsenic trivalent;
- A' est au moins un élément choisi parmi
  les éléments monovalents alcalins;
  les éléments divalents appartenant au groupe comprenant les alcalino-terreux, l'étain, le plomb, le samarium, l'europium, l'erbium, le thulium ou l'ytterbium;
  les éléments quadrivalents appartenant au groupe comprenant le thorium, l'uranium, les éléments du groupe IVA, le cérium, le praséodyme, le terbium;
- B est au moins un élément hexavalent choisi parmi ceux des groupes VIA, VIIA, VIII et du groupe VIB excepté l'oxygène;
- B' est au moins un élément choisi parmi le lithium, le sodium, le magnésium, le calcium, le scandium, l'yttrium, les terres rares de numéro atomique 63 à 71, les éléments des groupes IVA à IIB dans un état d'oxydation inférieur à 6, l'aluminium III, le silicium IV, le gallium III, le germanium IV, l'indium III, l'étain IV, le phosphore V, l'antimoine V et le bismuth V;
- X est au moins un anion choisi parmi le soufre, le fluor ou le chlore;
- x, y et z vérifient les équations suivantes :

$$0 \leq x < 2;\ 0 \leq y < 2;\ 0 \leq z \leq 3$$

et avec comme condition que lorsque A est le lanthane et B le tungstène ou le molybdène, au moins un de x, de y ou de z est différent de 0;
les composés présentant un réseau cationique de type $\beta$-$SnWO_4$ cubique ou pseudo-cubique.

2. Composé selon la revendication 1, **caractérisé en ce qu'**il répond à la formule (1) dans laquelle A' est au moins un élément mono ou divalent autre que le plomb ou l'étain et où x vérifie l'équation : $0 \leq x \leq 1$ et plus particulièrement $0 \leq x \leq 0,6$.

**3.** Composé selon la revendication 1 ou 2, **caractérisé en ce qu'**il répond à la formule (1) dans laquelle y vérifie l'équation : $0 \leq y \leq 1,5$.

**4.** Composé selon l'une des revendications précédentes, **caractérisé en ce qu'**il répond à la formule (1) dans laquelle A est au moins une terre rare trivalente, plus particulièrement choisie dans le groupe comprenant le lanthane, le cérium, le praséodyme, le néodyme, le samarium, l'europium et le gadolinium.

**5.** Composé selon la revendication 4, **caractérisé en ce qu'**il répond à la formule (1) dans laquelle A est le lanthane et/ou le néodyme.

**6.** Composé selon l'une des revendications précédentes, **caractérisé en ce qu'**il répond à la formule (1) dans laquelle A est le lanthane en combinaison avec le bismuth.

**7.** Composé selon l'une des revendications précédentes **caractérisé en ce qu'**il répond à la formule (1) dans laquelle A' est au moins un élément choisi parmi le potassium, le strontium, le baryum.

**8.** Composé selon l'une des revendications précédentes **caractérisé en ce qu'**il répond à la formule (1) dans laquelle B est le molybdène.

**9.** Composé selon la revendication 8 **caractérisé en ce qu'**il répond à la formule (1) dans laquelle B est le molybdène en combinaison avec le tungstène et/ou le chrome.

**10.** Composé selon l'une des revendications précédentes **caractérisé en ce qu'**il répond à la formule (1) dans laquelle B' est le vanadium.

**11.** Composé selon la revendication 8 **caractérisé en ce qu'**il répond à la formule (1) dans laquelle B est le molybdène et B' le soufre.

**12.** Utilisation comme conducteur ionique d'un composé selon l'une des revendications précédentes ou de formule $La_2Mo_2O_9$.

**13.** Dispositif du type sonde à oxygène, pile à combustible, réacteur chimique à membrane, membrane de séparation d'oxygène, pile électrochimique, capteur de NOx, **caractérisé en ce qu'**il comprend un composé selon l'une des revendications 1 à 11 à titre de conducteur ionique.

**Claims**

**1.** A compound with formula (1):

$$A_{2-x}A'_xB_{2-y}B'_yO_{9-z+\delta}X_z$$

in which:

- A is at least one trivalent element selected from trivalent rare earths, trivalent bismuth, trivalent antimony and trivalent arsenic;
- A' is at least one element selected from:

  o monovalent alkali elements;
  o divalent elements from the group comprising alkaline-earths, tin, lead, samarium, europium, erbium, thulium and ytterbium;
  o quadrivalent elements from the group comprising thorium, uranium, group IVA elements, cerium, praseodymium and terbium;

- B is at least one hexavalent element selected from groups VIA, VIIA, VIII and group VIB with the exception of oxygen;
- B' is at least one element selected from lithium, sodium, magnesium, calcium, scandium, yttrium, rare earths with atomic numbers of 63 to 71, elements from groups IVA to IIB with an oxidation number of less than 6, aluminium III, silicon IV, gallium III, germanium IV, indium III, tin IV, phosphorus V, antimony V and bismuth V;

- X is at least one anion selected from sulphur, fluorine and chlorine;
- x, y and z satisfy the following equations:

$$0 \leq x < 2; \quad 0 \leq y < 2; \quad 0 \leq z \leq 3$$

and with the condition that when A is lanthanum and B is tungsten or molybdenum, at least one of x, y or z is different from 0;

the compounds having a cationic cubic or pseudo-cubic $\beta$-SnWO$_4$ type lattice.

2. A compound according to claim 1, **characterized in that** it has formula (1) in which A' is at least one mono- or divalent element with the exception of lead or tin and in which x satisfies the equation: $0 \leq x \leq 1$, more particularly $0 \leq x \leq 0.6$.

3. A compound according to claim 1 or claim 2, **characterized in that** it has formula (1) in which y satisfies the equation: $0 \leq y \leq 1.5$.

4. A compound according to one of the preceding claims, **characterized in that** it has formula (1) in which A is at least one trivalent rare earth, more particularly selected from the group formed by lanthanum, cerium, praseodymium, neodymium, samarium, europium and gadolinium.

5. A compound according to claim 4, **characterized in that** it has formula (1) in which A is lanthanum and/or neodymium.

6. A compound according to one of the preceding claims, **characterized in that** it has formula (1) in which A is lanthanum in combination with bismuth.

7. A compound according to one of the preceding claims, **characterized in that** it has formula (1) in which A' is at least one element selected from potassium, strontium and barium.

8. A compound according to one of the preceding claims, **characterized in that** it has formula (1) in which B is molybdenum.

9. A composition according to claim 8, **characterized in that** it has formula (1) in which B is molybdenum in combination with tungsten and/or chromium.

10. A compound according to one of the preceding claims, **characterized in that** it has formula (1) in which B' is vanadium.

11. A compound according to claim 8, **characterized in that** it has formula (1) in which B is molybdenum and B' is sulphur.

12. Use of a compound according to any one of the preceding claims or with formula La$_2$Mo$_2$O$_9$ as an ion conductor.

13. A device of the oxygen probe, fuel cell, chemical membrane reactor, oxygen separation membrane, electrochemical cell or NO$_x$ trap, **characterized in that** it comprises a compound according to any one of claims 1 to 11 as an ion conductor.

**Patentansprüche**

1. Verbindung der Formel (1):

$$A_{2-x}A'_xB_{2-y}B'_yO_{9-z+\delta}X_z$$

worin

- A zumindest ein dreiwertiges Element, ausgewählt aus dreiwertigen seltenen Erden, dreiwertigem Bismut, dreiwertigem Antimon und dreiwertigem Arsen, ist;
- A' zumindest ein Element, ausgewählt aus
einwertigen alkalischen Elementen;
zweiwertigen Elementen, die der aus Erdalkalimetallen, Zinn, Blei, Samarium, Europium, Erbium, Thulium und Ytterbium bestehenden Gruppe angehören; vierwertigen Elementen, die der aus Thorium, Uran, den Elementen der Gruppe IVA, Cer, Praseodym und Terbium bestehenden Gruppe angehören, ist;
- B zumindest ein sechswertiges Element, ausgewählt aus den Gruppen VIA, VIIA, VIII und der Gruppe VIB unter Ausnahme von Sauerstoff, ist;
- B' zumindest ein Element, ausgewählt aus Lithium, Natrium, Magnesium, Calcium, Scandium, Yttrium, seltenen Erden mit einer Ladungszahl von 63 bis 71, Elementen der Gruppen IVA bis IIB mit einer Oxidationsstufe von unter 6, Aluminium(III), Silicium(IV), Gallium(III), Germanium(IV), Indium(III), Zinn(IV), Phosphor(V), Antimon(V) und Bismut(V), ist;
- X zumindest ein Anion, ausgewählt aus Schwefel, Fluor oder Chlor, ist;
- für x, y und z Folgendes gilt:

$$0 \leq x < 2; \quad 0 \leq y < 2; \quad 0 \leq z \leq 3$$

mit der Maßgabe, dass, wenn A Lanthan und B Wolfram oder Molybdän ist, zumindest eines von x, y oder z nicht 0 ist;
wobei die Verbindungen ein kationisches Netzwerk vom kubischen oder pseudokubischen $\beta$-SnWO$_4$-Typ darstellt.

2. Verbindung nach Anspruch 1, **dadurch gekennzeichnet, dass** sie der Formel (1) entspricht, worin A' zumindest ein ein- oder zweiwertiges Element ist, das nicht Blei oder Zinn ist, und worin für x gilt: $0 \leq x \leq 1$, insbesondere $0 \leq x \leq 0,6$.

3. Verbindung nach Anspruch 1 oder 2, **dadurch gekennzeichnet, dass** sie der Formel (1) entspricht, worin für y gilt: $0 \leq y \leq 1,5$.

4. Verbindung nach einem der vorangehenden Ansprüche, **dadurch gekennzeichnet, dass** sie der Formel (1) entspricht, worin A zumindest ein dreiwertiges Seltenerdelement ist, insbesondere ausgewählt aus der aus Lanthan, Cer, Praseodym, Neodym, Samarium, Europium und Gadolinium bestehenden Gruppe.

5. Verbindung nach Anspruch 4, **dadurch gekennzeichnet, dass** sie der Formel (1) entspricht, worin A Lanthan und/oder Neodym ist.

6. Verbindung nach einem der vorangehenden Ansprüche, **dadurch gekennzeichnet, dass** sie der Formel (1) entspricht, worin A Lanthan kombiniert mit Bismut ist.

7. Verbindung nach einem der vorangehenden Ansprüche, **dadurch gekennzeichnet, dass** sie der Formel (1) entspricht, worin A' zumindest ein Element, ausgewählt aus Kalium, Strontium und Barium, ist.

8. Verbindung nach einem der vorangehenden Ansprüche, **dadurch gekennzeichnet, dass** sie der Formel (1) entspricht, worin B Molybdän ist.

9. Verbindung nach Anspruch 8, **dadurch gekennzeichnet, dass** sie der Formel (1) entspricht, worin B Molybdän kombiniert mit Wolfram und/oder Chrom ist.

10. Verbindung nach einem der vorangehenden Ansprüche, **dadurch gekennzeichnet, dass** sie der Formel (1) entspricht, worin B' Vanadium ist.

11. Verbindung nach Anspruch 8, **dadurch gekennzeichnet, dass** sie der Formel (1) entspricht, worin B Molybdän und B' Schwefel ist.

**12.** Verwendung einer Verbindung nach einem der vorangehenden Ansprüche oder gemäß der Formel $La_2Mo_2O_9$ als Ionenleiter.

**13.** Vorrichtung in Form einer Sauerstoffsonde, Brennstoffzelle, chemischen Membran-Brennstoffzelleneinheit, Sauerstoff-Trennmembran, elektrochemischen Batterie oder eines NOx-Fängers, **dadurch gekennzeichnet, dass** sie eine Verbindung nach einem der Ansprüche 1 bis 11 als Ionenleiter umfasst.